# FASCICULE DE BREVET EUROPEEN

(11) **EP 3 141 804 B1**
(45) Date de publication et mention de la délivrance du brevet: **27.09.2023**
(21) Numéro de dépôt: 16187642.0
(22) Date de dépôt: 07.09.2016
(51) Int. Cl.: G02B 19/00, G02B 3/00, F21S 41/255, F21S 41/143, F21S 41/275, F21S 41/663, F21S 41/153

(54) **MODULE D'ÉCLAIRAGE DE PROJECTEUR DE VÉHICULE AUTOMOBILE ET PROJECTEUR ASSOCIÉ**
BELEUCHTUNGSMODUL FÜR KRAFTFAHRZEUGSCHEINWERFER, UND ENTSPRECHENDER SCHEINWERFER
LIGHTING MODULE OF A MOTOR VEHICLE HEADLIGHT AND ASSOCIATED HEADLIGHT

(30) Priorité: 14.09.2015 FR 1558512
(43) Date de publication de la demande: 15.03.2017
(73) Titulaire: VALEO VISION, 93012 Bobigny Cedex (FR)
(72) Inventeur: DE LAMBERTERIE, Antoine, 75019 PARIS (FR)
(74) Mandataire: Valeo Visibility

(56) Documents cités:
- EP-A1- 2 237 080
- EP-A1- 2 749 810
- EP-A1- 2 840 298
- FR-A- 818 691
- US-A1- 2015 252 975

## Description

La présente invention concerne un module d'éclairage de projecteur de véhicule automobile, du type comprenant une source lumineuse, définissant une première direction principale d'émission, sensiblement horizontale, et une lentille comportant une surface d'entrée et une surface de sortie.

Il est connu de prévoir sur un véhicule automobile des fonctions d'éclairage en feux de route et en feux de croisement. La première fournit un éclairage de toute la largeur de la route devant le véhicule. La seconde fournit un éclairage essentiellement dirigé vers le bas, avec un éclairage latéral réduit, de manière à ne pas éblouir les conducteurs de véhicules venant à contresens.

Une évolution des feux de route a conduit à un système de feux adaptatifs. Ces derniers permettent d'éclairer suffisamment l'ensemble de la route se trouvant devant le véhicule, y compris certaines zones potentiellement à risque, telles que les bas-côtés, sur lesquels peuvent se trouver des piétons. Par ailleurs, l'éclairage est supprimé dans certaines zones sélectionnées, correspondant à certaines positions de véhicules venant à contresens, pour éviter l'éblouissement des conducteurs.

Pour cela, la technique dite du « Matrix beam » comprend le découpage fictif de la scène située devant le véhicule en plusieurs bandes rectangulaires verticales qui sont éclairées sélectivement selon la partie de la scène que l'on souhaite illuminer.

De tels projecteur de véhicule automobile sont notamment décrits dans les documents EP2278217 et EP2730838. En particulier, le document EP2730838 décrit un module d'éclairage comprenant notamment plusieurs sources lumineuses et une lentille du type précité.

Le module décrit dans le document EP2730838 est de type à anamorphose, c'est-à-dire qu'il comporte un réflecteur cylindrique qui renvoie la lumière des sources lumineuses sur la lentille. Des modules d'éclairage à guides lumineux sont également connus.

La présence de pièces supplémentaire entre les sources lumineuses et la lentille, telles que le réflecteur ou le guide, augmente les coûts de fabrication et nécessite des ajustements dans le positionnement des éléments du module.

Par ailleurs, il existe des modules d'éclairage à imagerie directe, c'est-à-dire sans pièce intermédiaire entre les sources lumineuses et la lentille, comme décrit par exemple dans le document EP2237080. Cependant, un tel module est adapté à un éclairage non dilaté verticalement.

La présente invention a pour but de proposer un module d'éclairage permettant un éclairage en faisceaux verticaux de type « Matrix beam », avantageusement en imagerie directe.

A cet effet, la présente invention se rapporte à un module d'éclairage du type précité, dans lequel la surface d'entrée de la lentille est formée de facettes, chaque facette formant une lentille partielle avec une partie associée de la surface de sortie, chacune desdites lentilles partielles étant configurée de sorte à projeter (à l'infini) une image de la source lumineuse, lesdites images projetées par lesdites lentilles partielles étant sensiblement identiques, chaque lentille partielle étant configurée de sorte à réaliser un étalement d'un faisceau lumineux émis par la source lumineuse, dans une deuxième direction sensiblement verticale, l'étalement vertical étant de préférence progressif, l'intensité lumineuse étant plus importante en partie basse des faisceaux.

Suivant d'autres aspects avantageux de l'invention, le module d'éclairage comporte l'une ou plusieurs des caractéristiques suivantes, prises isolément ou suivant toutes les combinaisons techniques possibles :
- la lentille est alignée avec la source lumineuse selon la première direction, ladite lentille projetant une image directe de la source ;
- la lentille est symétrique selon un plan sensiblement vertical, parallèle à la première direction ;
- au moins une facette, et de préférence chaque facette de la lentille, présente un contour sensiblement polygonal ;
- la source lumineuse est formée par au moins une diode électroluminescente ;
- la source lumineuse est formée par plusieurs diodes préférentiellement identiques, alignées perpendiculairement à la première direction, les diodes voisines étant séparées par des espaces n'émettant pas de lumière.

L'invention se rapporte en outre à un projecteur de véhicule automobile, comprenant au moins un module d'éclairage tel que décrit ci-dessus.

Suivant d'autres aspects avantageux de l'invention, le projecteur comporte l'une ou plusieurs des caractéristiques suivantes, prises isolément ou suivant toutes les combinaisons techniques possibles :
- le projecteur comprend deux modules d'éclairage, chaque module comprenant une source lumineuse identique formée de diodes électroluminescentes et disposée selon une même direction d'alignement des diodes, chaque diode de l'une desdites deux sources lumineuses étant décalée d'une distance, selon ladite direction d'alignement, par rapport à une diode correspondante de l'autre desdites deux sources lumineuses, ladite distance étant inférieure à un pas de disposition des diodes d'une même source lumineuse ;
- le projecteur est équipé de moyens permettant d'allumer ou d'éteindre sélectivement une partie de la ou des source(s) lumineuse(s) du ou des module(s) d'éclairage de sorte à modifier l'aspect d'un faisceau lumineux émis par ledit projecteur.

L'invention sera mieux comprise à la lecture de la description qui va suivre, donnée uniquement à titre d'exemple non limitatif et faite en se référant aux dessins sur lesquels :
- la figure 1 est une vue schématique, en perspective, d'un module d'éclairage selon un mode de réalisation de l'invention ;
- la figure 2 est une vue schématique en coupe du module de la figure 1 ;
- la figure 3 représente des courbes isolux de l'image à l'infini du module des figures 1 et 2 ;
- la figure 4 est une représentation schématique d'un projecteur comprenant deux modules d'éclairage analogues au module des figures 1 et 2 ; et
- la figure 5 représente des courbes isolux de l'image à l'infini du projecteur de la figure 4.

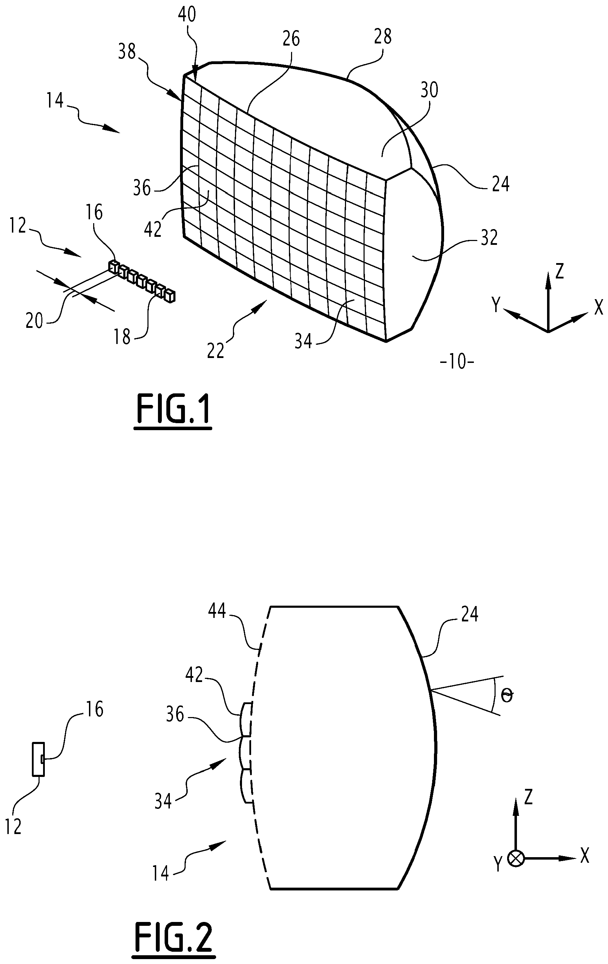

La figure 1 représente de manière schématique un module d'éclairage 10 pour projecteur de véhicule automobile. Le module 10 comporte une source lumineuse 12 et une lentille 14.

On considère une base orthonormée (X, Y, Z) représentée aux figures 1, 2 et 4. Les axes horizontaux X et Y sont respectivement parallèle et perpendiculaire à la direction de marche du véhicule et l'axe Z est vertical.

La source lumineuse 12 est préférentiellement une source lumineuse à semiconducteurs. Par exemple, la source lumineuse 12 comporte au moins une diode électroluminescente ou LED 16, de préférence plusieurs LED 16. Les LED 16 de la source 12 sont de préférence identiques.

Les LED 16 de la source 12 sont alignées selon la direction Y et disposées de sorte à émettre de la lumière selon une direction principale parallèle à X.

De préférence, la source 12 comporte entre cinq et quinze LED 16 alignées selon Y. Dans le mode de réalisation de la figure 1, la source 12 comporte sept LED 16.

Les LED 16 ont par exemple une forme carrée, de côtés disposés selon Y et Z. Chaque LED 16 a par exemple des dimensions de 1 mm x 1 mm.

Les LED 16 voisines sont séparées par des espaces 18 n'émettant pas de lumière. De préférence, les LED 16 voisines de la source 12 se succèdent d'un pas 20 constant selon Y.

La lentille 14 comporte une surface d'entrée 22 et une surface de sortie 24, disposées de sorte qu'une direction principale de propagation de la lumière soit parallèle à X. Plus préférentiellement, la lentille 14 comporte un plan de symétrie vertical (X, Z).

Chacune des surfaces d'entrée 22 et de sortie 24 a un contour 26, 28 formant une projection sensiblement rectangulaire dans un plan (Y, Z). Les côtés desdites projections sont sensiblement disposés selon les directions Y et Z. Dans le mode de réalisation de la figure 1, la lentille 14 comporte des bords 30, 32 disposés dans des plans (X, Y) et (Y, Z), qui relient les contours 26, 28 desdites surfaces d'entrée 22 et de sortie 24.

La lentille 14 est une lentille asphérique. La surface de sortie 24 est de préférence lisse, c'est-à-dire sans aspérités. De préférence, la surface de sortie 24 a une forme convexe dans des plans (X, Y) et (X, Z).

Au contraire, la surface d'entrée 22 est formée de facettes 34 configurées pour générer une répartition non homogène de la lumière de la source 12. De préférence, les facettes 34 sont disposées sensiblement perpendiculairement à X.

Un contour 36 des facettes 34 est défini par une discontinuité de la surface d'entrée 22, sous forme d'une arête saillante ou rentrante. Selon un mode de réalisation, une partie des contours 36 forme des marches entre deux facettes 34 voisines.

Les contours 36 des facettes 34 sont préférentiellement de forme sensiblement polygonale. Dans le mode de réalisation de la figure 1, les contours 36 sont de forme sensiblement carrée, de dimensions de 4 mm x 4 mm. D'autres formes, notamment rectangulaire ou hexagonale, sont possibles.

Préférentiellement, le nombre total de facettes 34 de la surface d'entrée 22 est supérieur à 100, plus préférentiellement supérieur à 300 voire à 500.

Dans le mode de réalisation de la figure 1, les facettes 34 sont alignées en rangées horizontales 38, disposées selon Y, et en rangées verticales 40, disposées selon Z. Les rangées horizontales 38 et les rangées verticales 40 comportent respectivement douze et neuf facettes 34.

Chaque facette 34 présente une surface 42 lisse, c'est-à-dire sans arête ou aspérité. Chaque surface 42 est par exemple sensiblement convexe dans des plans (X, Y) et (X, Z).

Chaque facette 34 forme une lentille partielle avec une partie associée de la surface de sortie 24. Chacune desdites lentilles partielles est configurée de sorte à projeter à l'infini une image de la source lumineuse 12, en particulier des LED 16. Par « à l'infini », on entend à une distance très supérieure, par exemple 100 fois supérieure, aux dimensions externes du module 10.

La lentille 14 et les facettes 34 sont configurées de sorte que les images projetées par lesdites lentilles partielles sont sensiblement identiques. Lesdites images se superposent pour former l'image projetée de la source 12 par la lentille 14.

Plus précisément, la lentille 14 est apte à former, à partir de la lumière des LED 16 de la source 12, un ensemble de faisceaux de faible largeur et ayant une forme verticale. De préférence, l'intensité lumineuse est plus importante en partie basse des faisceaux.

Dans le mode de réalisation de la figure 1, la focale de la lentille 14 donne d'une LED 16 de 1x1 mm une image de 1.35°x1.35°. La courbure horizontale des facettes 34, selon (X, Y), est calculée de manière à étaler cette image de 1.35°. La courbure verticale des facettes 34, selon (X, Z), est calculée pour étaler de façon progressive la lumière jusque +5° et -1.5° en hauteur.

Les surfaces 42 des facettes 34 sont définies à l'aide d'un outil informatique, d'une manière explicitée ci-après, à l'appui de la figure 2. Seules les surfaces 42 de trois facettes 34 sont représentées sur la figure 2.

En considérant que les LED 16 sont des sources lumineuses lambertiennes et sur la base des coordonnées spatiales de la source 12 et de la surface de sortie 24, il est possible de définir quelle est l'intensité lumineuse souhaitée pour chaque angle θ, mesuré par rapport à la normale avec la surface de sortie 24 en chaque point de ladite surface.

L'ensemble desdites intensités lumineuses souhaitées définit un profil de répartition spatiale de la lumière. On définit par ailleurs pour la lentille 14 une surface d'entrée primaire 44 lisse. En fonction de ces deux paramètres et des dimensions souhaitées des contours 36 des facettes 34, l'outil informatique construit chaque surface 42 à partir de la surface d'entrée primaire 44, sous forme d'une nappe 3D générée par deux courbes respectivement contenues dans des plans (X, Y) et (X, Z).

La lentille 14 est ensuite réalisée, par exemple en plastique moulé, à partir du modèle conçu par l'outil informatique.

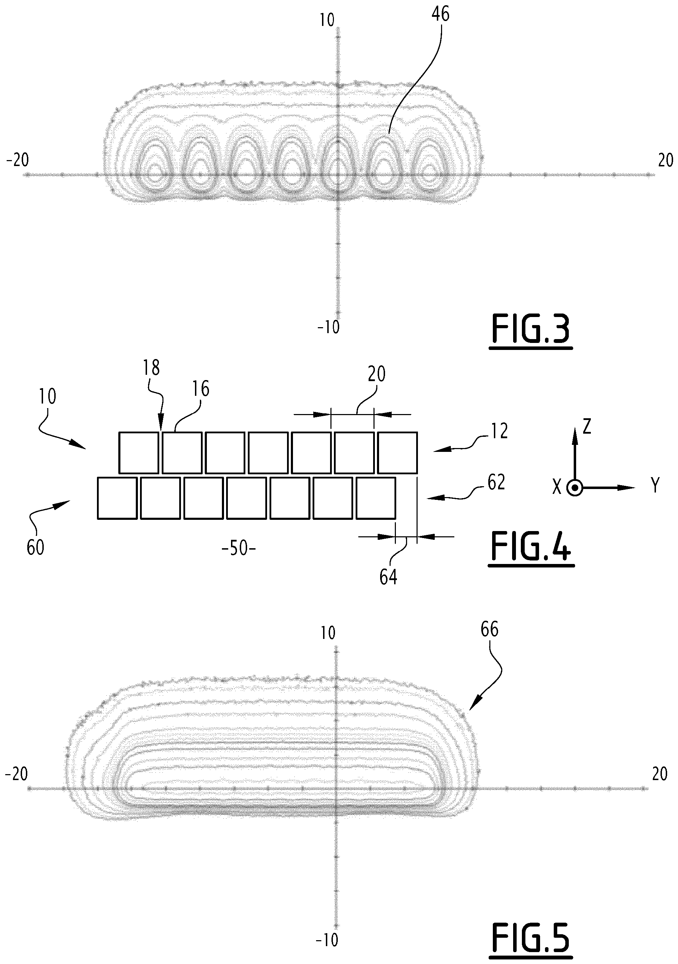

La figure 3 représente les courbes isolux de l'image à l'infini du module 10 lorsque toutes les LED 16 sont allumées. Chaque LED 16, séparée des autres LED par un espace 18, génère un faisceau 46. Ledit faisceau 46 forme un segment vertical dont les bords latéraux sont flous. Le flou est obtenu par l'étalement horizontal créé par la forme des surfaces 42 des facettes. L'intensité lumineuse est plus importante en partie basse des faisceaux 46.

La figure 4 représente une vue partielle d'un projecteur 50 de véhicule automobile comprenant deux modules d'éclairage 10, 60. Le module 60 est analogue au module 10 des figures 1 et 2 et comprend une source lumineuse 62 et une lentille. Seules les sources lumineuses 12, 62 des modules d'éclairage 10, 60 sont représentées sur la figure 4.

De préférence, la source lumineuse 62 est identique à la source lumineuse 12. Dans l'exemple de la figure 4, les sources lumineuses 12, 62 comprennent chacune sept LED 16 alignées selon Y.

Les sources 12 et 62 sont décalées d'une distance 64 selon Y, la distance 64 étant égale à un demi-pas 20 entre deux LED 16 voisines d'une même LED. Ainsi, les sources 12 et 62 sont disposées en « opposition de phase » selon Y.

Selon une variante, le projecteur comporte trois modules dont les sources lumineuses sont identiques et décalées d'un tiers de pas, pour un résultat similaire.

La lentille du module 60 est analogue à la lentille 14 du module 10, à la forme des surfaces 42 près. Les lentilles des modules 10 et 60 sont configurées de sorte à générer un faisceau complet homogène 66 à partir de la juxtaposition des faisceaux des sources 12, 62 de chacun des modules 10, 60. Le résultat obtenu est illustré à la figure 5, qui représente les courbes isolux de l'image à l'infini du projecteur 50 lorsque toutes les LED 16 des modules 10, 60 sont allumées.

Cette juxtaposition de faisceaux distincts 46 formant un faisceau homogène 66 permet de créer une fonction d'éclairage adaptative à partir du projecteur 50.

De préférence, le projecteur 50 est couplé à un dispositif de contrôle en temps réel de l'alimentation électrique des LED 16 des sources 12, 62. Le dispositif de contrôle comporte par exemple un détecteur de lumière apte à signaler la présence d'un véhicule venant en sens inverse. La détection de ladite présence donne lieu à l'extinction de certaines LED 16 pendant une période déterminée. Certains faisceaux 46 s'éteignent, générant la présence d'une bande sombre dans le faisceau obtenu en sortie du projecteur 50.

Une telle bande sombre permet de ne pas éblouir les autres usagers placés dans les directions associées. Les autres LED 16 restent allumées, permettant un éclairage suffisant de la route, y compris des zones à risque telles que les bas-côtés.

De tels projecteurs 50, utilisés en feux de route, offrent un gain de confort et de sécurité important en comparaison d'un feu de croisement qui n'éclaire que vers le bas.

## Revendications

1. Module d'éclairage (10) de projecteur de véhicule automobile, comprenant :
une source lumineuse (12) définissant une première direction principale d'émission (X) sensiblement horizontale ; et une lentille (14) comportant une surface d'entrée (22) et une surface de sortie (24),
la surface d'entrée étant formée de facettes (34), chaque facette formant une lentille partielle avec une partie associée de la surface de sortie (24), chacune desdites lentilles partielles étant configurée de sorte à projeter une image de la source lumineuse, lesdites images projetées par lesdites lentilles partielles étant sensiblement identiques, **caractérisé en ce que** chaque lentille partielle (34, 24) est configurée de sorte à réaliser un étalement d'un faisceau lumineux émis par la source lumineuse, dans une deuxième direction (Z) sensiblement verticale, l'étalement vertical étant de préférence progressif, l'intensité lumineuse étant plus importante en partie basse des faisceaux.

2. Module d'éclairage selon la revendication 1, dans lequel la lentille (14) est alignée avec la source lumineuse (12) selon la première direction (X), ladite lentille projetant une image directe de la source.

3. Module d'éclairage selon l'une des revendications précédentes, dans lequel la lentille (14) est symétrique selon un plan (X, Z) sensiblement vertical, parallèle à la première direction.

4. Module d'éclairage selon l'une des revendications précédentes, dans lequel au moins une facette (34), et de préférence chaque facette de la lentille, présente un contour (36) sensiblement polygonal.

5. Module d'éclairage selon l'une des revendications précédentes, dans lequel la source lumineuse (12) est formée par au moins une diode électroluminescente (16).

6. Module d'éclairage selon la revendication 5, dans lequel la source lumineuse (12) est formée par plusieurs diodes (16) préférentiellement identiques, alignées perpendiculairement à la première direction, les diodes voisines étant séparées par des espaces (18) n'émettant pas de lumière.

7. Projecteur (50) de véhicule automobile, comprenant au moins un module d'éclairage (10) selon l'une des revendications précédentes.

8. Projecteur selon la revendication 7, comprenant deux modules (10, 60) selon la revendication 6, chaque module comprenant une source lumineuse (12, 62) identique et disposée selon une même direction (Y) d'alignement des diodes (16), chaque diode de l'une desdites deux sources lumineuses étant décalée d'une distance (64), selon ladite direction d'alignement, par rapport à une diode correspondante de l'autre desdites deux sources lumineuses, ladite distance étant inférieure à un pas (20) de disposition des diodes (16) d'une même source lumineuse.

9. Projecteur selon la revendication 7 ou la revendication 8, équipé de moyens permettant d'allumer ou d'éteindre sélectivement une partie (16) de la ou des source(s) lumineuse(s) (12, 62) du ou des module(s) d'éclairage (10, 60) de sorte à modifier l'aspect d'un faisceau lumineux émis par ledit projecteur.

## Patentansprüche

1. Beleuchtungsmodul (10) für einen Kraftfahrzeugscheinwerfer, umfassend: eine Lichtquelle (12), die eine erste im Wesentlichen horizontale Hauptaussendungsrichtung (X) definiert; und eine Linse (14) mit einer Eintrittsfläche (22) und einer Austrittsfläche (24), wobei die Eintrittsfläche von Facetten (34) gebildet ist, wobei jede Facette eine Teillinse mit einem zugehörigen Abschnitt der Austrittsfläche (24) bildet, wobei jede der Teillinsen dazu ausgebildet ist, ein Bild der Lichtquelle zu projizieren, wobei die Bilder, die von den Teillinsen projiziert werden, im Wesentlichen identisch sind, **dadurch gekennzeichnet, dass** jede Teillinse (34, 24) dazu ausgebildet ist, eine Verteilung eines Lichtbündels, das von der Lichtquelle ausgesendet wird, in einer im Wesentlichen vertikalen zweiten Richtung (Z) durchzuführen, wobei die vertikale Verteilung vorzugsweise progressiv ist, wobei die Lichtstärke im unteren Abschnitt der Bündel größer ist.

2. Beleuchtungsmodul nach Anspruch 1, wobei die Linse (14) mit der Lichtquelle (12) in der ersten Richtung (X) ausgerichtet ist, wobei die Linse ein direktes Bild der Quelle projiziert.

3. Beleuchtungsmodul nach einem der vorhergehenden Ansprüche, wobei die Linse (14) gemäß einer im Wesentlichen vertikalen Ebene (X, Z) symmetrisch ist, die parallel zur ersten Richtung verläuft.

4. Beleuchtungsmodul nach einem der vorhergehenden Ansprüche, wobei wenigstens eine Facette (34), und vorzugsweise jede Facette der Linse, eine im Wesentlichen mehreckige Kontur (36) aufweist.

5. Beleuchtungsmodul nach einem der vorhergehenden Ansprüche, wobei die Lichtquelle (12) von wenigstens einer Leuchtdiode (16) gebildet ist.

6. Beleuchtungsmodul nach Anspruch 5, wobei die Lichtquelle (12) von mehreren, vorzugsweise identischen Dioden (16) gebildet ist, die senkrecht zur ersten Richtung ausgerichtet sind, wobei die benachbarten Dioden durch Zwischenräume (18) getrennt sind, die kein Licht aussenden.

7. Kraftfahrzeugscheinwerfer (50) umfassend wenigstens ein Beleuchtungsmodul (10) nach einem der vorhergehenden Ansprüche.

8. Scheinwerfer nach Anspruch 7, der zwei Module (10, 60) nach Anspruch 6 umfasst, wobei jedes Modul eine Lichtquelle (12, 62) umfasst, die identisch ist und in ein und derselben Ausrichtungsrichtung (Y) der Dioden (16) angeordnet ist, wobei jede Diode einer der zwei Lichtquellen um einen Abstand (64) in der Ausrichtungsrichtung im Verhältnis zu einer entsprechenden Diode der anderen der zwei Lichtquellen versetzt ist, wobei der Abstand kleiner als eine Anordnungsteilung (20) der Dioden (16) ein und derselben Lichtquelle ist.

9. Scheinwerfer nach Anspruch 7 oder 8, der mit Mitteln ausgerüstet ist, die es ermöglichen, einen Abschnitt (16) der Lichtquelle (n) (12, 62) des Leuchtmoduls bzw. der Leuchtmodule (10, 60) selektiv ein- oder auszuschalten, um das Erscheinungsbild eines Lichtbündels zu ändern, das vom Scheinwerfer ausgesendet wird.

## Claims

1. Lighting module (10) of a motor vehicle headlight, comprising:
a light source (12) defining a first main direction of emission (X) that is substantially horizontal;
and a lens (14) comprising an input surface (22) and an output surface (24),
the input surface being formed by facets (34), each facet forming a partial lens with an associated part of the output surface (24), each of said partial lenses being configured so as to project an image of the light source, said images projected by said partial lenses being substantially identical, **characterized in that** each partial lens (34, 24) is configured so as to produce a spreading of a light beam emitted by the light source, in a second direction (Z) that is substantially vertical, the vertical spreading being preferably progressive, the light intensity being greater in the bottom part of the beams.

2. Lighting module according to Claim 1, wherein the lens (14) is aligned with the light source (12) in the first direction (X), said lens projecting a direct image of the source.

3. Lighting module according to one of the preceding claims, wherein the lens (14) is symmetrical according to a substantially vertical plane (X, Z), parallel to the first direction.

4. Lighting module according to one of the preceding claims, wherein at least one facet (34), and preferably each facet of the lens, has a substantially polygonal outline (36).

5. Lighting module according to one of the preceding claims, wherein the light source (12) is formed by at least one light-emitting diode (16).

6. Lighting module according to Claim 5, wherein the light source (12) is formed by several diodes (16) that are preferentially identical, aligned at right angles to the first direction, the neighbouring diodes being separated by spaces (18) not emitting light.

7. Motor vehicle headlight (50), comprising at least one lighting module (10) according to one of the preceding claims.

8. Headlight according to Claim 7, comprising two modules (10, 60) according to Claim 6, each module comprising a light source (12, 62) that is identical and disposed in a same direction (Y) of alignment of the diodes (16), each diode of one of said two light sources being offset by a distance (64), in said direction of alignment, with respect to a corresponding diode of the other of said two light sources, said distance being less than a pitch (20) of disposition of the diodes (16) of a same light source.

9. Headlight according to Claim 7 or Claim 8, equipped with means for selectively switching on or switching off a part (16) of the light source or sources (12, 62) of the lighting module or modules (10, 60) so as to modify the appearance of a light beam emitted by said headlight.
